(19) Europäisches Patentamt
European Patent Office
Office européen des brevets

(11) Publication number: **0 010 817**
**B1**

(12) # EUROPEAN PATENT SPECIFICATION

(45) Date of publication of patent specification: **16.03.83**

(51) Int. Cl.³: **F 28 F 21/06, F 24 J 3/02**

(21) Application number: **79200637.1**

(22) Date of filing: **02.11.79**

(54) **Apparatus for the exchange of heat by means of channels having a small diameter, and the use of this apparatus in different heating systems.**

(30) Priority: **06.11.78 NL 7811005**
**06.11.78 NL 7811006**

(43) Date of publication of application:
**14.05.80 Bulletin 80/10**

(45) Publication of the grant of the patent:
**16.03.83 Bulletin 83/11**

(84) Designated Contracting States:
**BE DE FR GB IT NL SE**

(56) References cited:
DE - A - 1 601 185
DE - A - 2 414 663
FR - A - 2 339 820
US - A - 3 435 893
US - A - 3 537 935
US - A - 3 616 022

(73) Proprietor: **Akzo N.V.**
**Velperweg 76**
**NL-6824 BM Arnhem (NL)**

(72) Inventor: **Vleggaar, Jan, Dr.**
**Lorentzlaan 36**
**NL-7002 HB Doetinchem (NL)**
Inventor: **Korstanje, Hugo Peter, Ir.**
**Jachtlaan 8**
**NL-6891 CK Rozendaal (NL)**

(74) Representative: **Sieders, René et al,**
**P.O. Box 314**
**NL-6800 AH Arnhem (NL)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

EP 0 010 817 B1

Apparatus for the exchange of heat by means of channels having a small diameter and the use of this apparatus in different heating systems.

The apparatus for the exchange of heat between at least two fluids, which apparatus is provided with channels having a hydraulic diameter of not more than 3 mm, said channels forming at least two groups, the first group being provided with connections for transporting a first fluid and the second group being provided with connections for transporting a second fluid, and each group is formed by a layer consisting of a series of channels, in which the centre-to-centre distance of successive channels is less than five times the hydraulic diameter of these channels.

A heat exchanger of the type indicated above is known from US—A—3 616 022, which particularly relates to a process for manufacturing components for heat exchangers comprising synthetic hollow filaments, which are formed into a package or block. Although under certain circumstances reasonable results may be obtained with such known heat exchangers comprising hollow filaments, the construction applied is insufficiently reliable because of unduly high vapour permeability.

A heat exchanger of a somewhat different type is known from DE—A—16 01 185 in which use is made of hollow filaments having an outer diameter of 0,5 to 10 mm. The inner wall, which may for instance be of polypropylene of the hollow filaments is provided with a coating of metal to obtain a higher resistance to compressive loading. After such metal coating has been applied, the original core of hollow fiber material is removed. Further in this known apparatus a long bundle of substantially parallel hollow filaments extend in a housing. The one fluid flows through the filaments and the other fluid flows through the housing space around and between the hollow filaments, in such a way as is mainly in conformity with the operation of a conventional heat exchanger comprising bundles of steel pipes. As is indicated in Fig. 5 and 6 of DE—A—16 01 185, the hollow fibers are clearly separated from each other by special separating devices. It is particularly this latter construction which leads to a heat exchanger having a relatively limited capacity.

The invention has for its object to provide a heat exchanger of the type indicated in the opening paragraph which no longer displays the abovementioned disadvantages. The heat exchanger according to the invention is characterized in the first place in that the channels of a group are formed in a layer-forming film comprising at least 50 channels, at least one side of said layer is externally covered with a coating which is so impermeable to the fluids that measured at an ambient temperature of 20°C and 20% relative humidity the water vapour permeability of the wall of the channels is less than 1 gramme/$m^2$ 24 hours.

Each group has preferably of from a few hundred to many thousands of channels, a number of four or more of such layer-forming groups of channels being provided. It is preferred, however, that use should be made of constructions comprising a few dozen up to a few hundred or a few thousand layers of channels. As a result, the heat exchanger according to the invention can be constructed in the form of a compact block, which makes it possible for a heat exchanger having a high efficiency to be accommodated in a very small space. The chance of leakage is minimal then and the flow of the two media through the channels allows of optimum control of the through-flow. In an effective embodiment the channels in each filament group extend parallel to each other. According to the invention the channels in each group may extend parallel to the channels in the next layer-forming groups. Each group of channels could form a substantially plane surface, the hollow channels in each group crossing the channels in the next layer-forming groups, more particularly at an angle of 90°.

A preferred embodiment of the heat exchanger according to the invention is characterized in that the channels of a group are formed in a layer-forming uninterrupted polymer film, to at least one side of which the desired coating is applied. Such an embodiment makes it possible in a simple manner to form as many as, for instance, a few thousand channels. The channels of a group could also be formed by a layer of closely adjacent hollow filaments, said coating being applied to one or both sides of said layer of filaments. With this last-mentioned embodiment the space between the hollow filaments may optionally be made to contain a filler, such as a resin. The channels used in the heat exchanger according to the invention have a hydraulic diameter of 0,05 to 3 mm, but preferably of 0,05 to 1 mm. The wall thickness of the hollow filaments is 5—20% of the diameter. It is preferred that the wall thickness should be approximately 10% of the diameter.

The heat exchanger is characterized according to the invention in that the channels are formed from one or more of the following substances or mixtures thereof:

- polyolefins, such as polyethylene, polypropylene and polyisobutylene;
- polystyrene and copolymers (random, alternating and block) of styrene and butadiene, acrylonitrile and acrylate esters;
- polyhaloolefins, such as polyvinyl chloride and polytetrafluoroethylene;
- polyvinyls, such as polyvinyl alcohol and polyvinyl acetate;
- polyacrylates and polymethacrylates, such as

polymethylmethacrylate and polymethylacrylate and other polyacrylates;
polyacrylonitrile;
elastomers such as natural rubber, synthetic rubbers, for instance silicone rubbers or polyolefinic rubbers or copolymers of the ethylenepropylene rubber type (E P D M);
polyoxides, such as polypropylene oxide and poly - 2,6 - dimethylphenylene oxide;
saturated and unsaturated polyesters, such as polyethylene terephthalate;
polyamides, such as nylon 6, nylon 66 and aromatic polyamides;
polycarbonates;
polyimides;
polybenzimidazoles;
polyurethanes;
semi-synthetic polymers, such as regenerated cellulose, more particularly those based on copper acetate;
thermohardening resins, such as epoxy resins and aminoplastics;
copolymers of two or more of the abovementioned polymers;
polysulphones;
inorganic polymers, such as polyphosphazenes.

The heat exchanger also may be built up of hollow bicomponent filaments, more particularly of the type with an inner ring of the one component and an outer ring of the other component.

Preferably the channels may be externally provided with a coating to improve the adhesion between successive layers and to reduce permeability, more particularly to reduce vapour permeability. Further, the walls of the channels may contain a filler, stabilizers. carbon black, pigments or like additives. In their simplest embodiment the channels have a substantially circular cross-section.

Depending on the requirements to be satisfied, however, they also may have an elliptical, triangular, quadrangular, pentagonal, hexagonal or other polygonal ring-shaped cross-section.

The heat exchanger according to the invention particularly may be advantageously applied in a thermal power system. Because of its compact construction and low weight the heat exchanger may with advantage be used in a motor vehicle, particularly as radiator for cooling liquid, as recuperator in the exhaust system for recovering energy, as heating element for the interior.

Favourable results are particularly to be expected when the heat exchanger according to the invention is used in a cooling or heat pump system. An example of such a heat pump system is a system in which heat is withdrawn from subsoil water with the aid of three circulation systems in which pumps and heat exchangers are placed and where of the heat exchangers a high efficiency is required, i.e. an efficiency higher than 90%, and preferably higher than 95%. Also for obtaining high efficiency the heat exchanger according to the invention is with advantage used for exchanging heat between substantially gaseous fluids. To save energy in the heating and conditioning of buildings the heat exchanger according to the invention is with advantage used in a system for the recovery of heat from ventilation air.

The apparatus according to the invention also may with advantage be used in a system for the storage of heat. The heat exchanger according to the invention also may very well be applied in a system for collecting solar energy, more particularly in a solar collector.

The invention is further described with references to the accompanying schematic drawing. For simplicity and illustration the numbers of channels or hollow filaments and layers in the various drawings are far lower than in reality. Figures 1, 2, 3 and 4 show various block-shaped heat exchangers according to the invention. Figures 5 and 6 show on a larger scale details of block-shaped heat exchangers. Figures 7, 8 and 9 show a few arrangements and connecting alternatives for block-shaped heat exchangers according to the invention. Figures 10, 11, 12, 13, 14, 15, 16, 17 illustrate some methods of manufacturing hollow filament packages.

Figures 18, 19, 20 and 21 illustrate a few variant embodiments of heat exchangers according to the invention.

Figures 22 and 23 show a few other embodiments of heat exchangers according to the invention.

Figures 24—30 illustrate hollow filaments having different cross-sectional shapes.

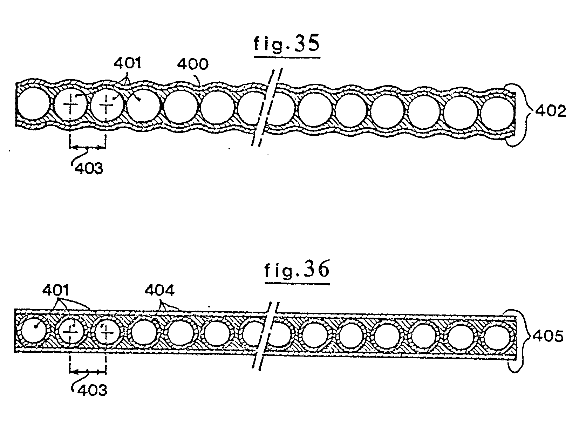

Figures 31 and 32 show cross-sections of hollow filaments whose diameters vary in longitudinal direction.

Figures 33 and 34 are detail views of a particular type of heat exchanger according to the invention.

Figures 35 and 36 show variant embodiments of layers of coated channels.

Figure 1 shows a block-shaped heat exchanger according to the invention which is generally referred to by the numeral 1 and built up of number, in the given case thirteen, of successive layers 2 each forming a group of hollow synthetic filaments 3, 4.

In Figure 5 the encircled part of the block 1 is represented on an enlarged scale. Each group of filaments forming a layer 2 forms a plane surface. In each layer 2 the hollow filaments 3, 4 run parallel to each other, but the hollow filaments 3 and 4 of the successive layers cross each other at right angles. The space between the hollow filaments 3, 4 is filled with a casting resin 5 or some other filling material having a good coefficient of heat conductivity. Moreover the filling material serves to keep the filaments in each layer together and also to bond the successive layers of filaments to each other. The hollow filaments 3 in the one layer serve to transport the one fluid in the direction indicated

by the arrows 6 and the hollow filaments 4 in the following layer transport the other fluid in the direction indicated by the arrows 7. The one fluid (arrow 6) is for instance supplied in the hot state and the other fluid (arrow 7) in the cold state. In the block which intensively operates as a heat exchanger the cold fluid is heated by the hot fluid. The successive layers 2 of the groups of hollow filaments 3 and 4 are each provided with separate feed and discharge connections (not shown in Figure 1) for the transportation of two fluids of different temperatures between which heat is to be exchanged. Figure 3 shows an embodiment of a heat exchanger which only differs from the construction according to Figure 1 in that the hollow filaments 4 in the one layer or group have a considerably smaller diameter than the hollow filaments 3 in the next layer or group. Figure 2 shows another block, which is generally referred to by the numeral 8. The block 8 likewise comprises groups of hollow filaments 10 and 11 forming successive layers 9. The hollow filaments 10 and 11 of the successive layers cross each other at right angles. Between every two successive layers of hollow filaments is a separating layer 12. These separating layers may be filled up with a medium which is particularly suitable for the storage of heat.

Figure 6 shows the encircled part of the block 8 on an enlarged scale. The space between the hollow filaments is again filled up with a filling material 13 and each layer of filaments has its upper and lower side coated with a foil of metal, for instance aluminium. The block 8 is also to be provided with separate feed and discharge connections (not shown) for each of the groups of hollow filaments 10 and 11. When the block 8 is to function as heat storage device, the block 8 and more particularly the layers 12 filled with material of a high heat storage capacity may first be heated by a hot first fluid supplied through the groups of hollow filaments 10. At a later stage or at the same time the heat collected in the layers 12 may be given off to a second fluid which can be discharged through the groups of hollow filaments 11.

Figure 4 shows a somewhat varied block-shaped heat exchanger. Near its top and near its bottom the block 15 contains layers 16 of groups of hollow filaments 17 and 18.

The block 15 must be provided with separate feed and discharge connections (not shown) for each of the groups of hollow filaments 17 and 18, between which there is to be an exchange of heat. The filaments layers 16 near the top and the bottom of the block 15 are separated from each other by an intermediate layer 19.

Figure 7 illustrates a block-shaped heat exchanger of hollow filaments, with the block 20 being mounted inside a frame 21. The block itself is of the type indicated in Figure 1. The block 20 is made up of eight successive layers 22, which are each built up of layers of parallel hollow filaments 23 and 24, the filaments of every two successive layers crossing each other at right angles. The exchange of heat between two fluids may be effected in a simple manner by feeding and discharging the one fluid along the line 25 and the other fluid along the line 26. Figure 8 shows another embodiment in which a number of heat-exchanging blocks 27 are mounted inside a frame 28 and the feed channels 29 and 30 for two different fluids, for instance hot and cold air, respectively, are connected to the blocks 27. The discharge channels for the heated and the cooled fluid are referred to by the numerals 31 and 32. The blocks 27 themselves may again be of the type shown in Figure 1. Figure 9 illustrates another alternative for connecting four heat exchanging blocks 310 destined for exchanging heat between two different fluids. The one fluid flows through the blocks 310 in the direction indicated by the arrows 320 and the other fluid flows through the blocks in the directions indicated by the arrows 330.

Figures 10 and 11 show a method of manufacturing a layer or group of hollow filaments. the hollow filaments 34 are each drawn off from supply packages 35 containing, for instance, melt-spun, hollow, nylon or polyester filaments. The hollow filaments 34 are suitably guided to run parallel to each other and over guide rolls 36 through a bath 37 of an impregnating agent. After the filaments have left the bath, the impregnating agent, for instance, a synthetic resin, will solidify, after which the sheet 38 of parallel hollow filaments 34 is wound onto a reel 39. The sheet of filaments 38 thus obtained can be cut into groups of layer-forming parallel hollow filaments which in their turn may be formed into the above-described blocks for the heat exchanger according to the invention. Of course, a far larger number of supply packages may be used than indicated in Figure 10.

For increased coherence a sheet 40 of parallel hollow filaments may at certain intervals be provided with a transverse connecting thread 41, as is shown in Figure 12. The mat thus formed may be coated with an aluminium foil.

Figures 13—17 illustrate a different method of making groups of layer-forming, hollow filaments. To this end a frame 42 shown in Fig. 13 is rotatably mounted in a support 43. The frame 42 is provided with a suitable drive (not shown). A hollow synthetic filament 47 is passed to the frame via a suitable feed system, which comprises guide rollers and tensioning rollers 44 and 45, respectively, and the roll 46. Figure 15 shows the situation in which the hollow filament 47 is wound into a first layer 48. Figure 16 shows the situation in which the hollow filament 47 is wound into a second layer 49, with the frame 42 being turned through 90°. Figure 17 shows the frame 42 on which there are wound a few filament layers 48, 49, etc. Such a frame wound with filaments may be impregnated with resin by dipping it in a bath of molten resin. After the resin has set, the package impregnated with it can be cut through along the lines 50 and 51, so that there are obtained a number of parallel layers of groups of hollow filaments, which layers are bonded to each other to form a package. One or more of such packages may be formed into the abovementioned heat-exchanger blocks (see Figure 1). Figures 18, 19, 20 and 21 still show a few other embodiments.

The elements 70 form sector-shaped filaments groups and may be assembled in various ways into a unit, as indicated in the Figures 18, 19, 20 and 21. Providing suitable connections for the various fluids in the manner indicated in Figure 21 again leads to obtaining a hollow filament heat exchanger according to the invention. Each fluid then passes through its own group of hollow filaments, the hollow filaments of the successive layers crossing each other.

Figures 22 and 23 are respectively a plan view and a perspective view of another variant embodiment of a heat exchanger according to the invention. In Figure 23 six packages 81 are attached to each other to form a kind of block. In the middle thereof, i.e. in the actual block, the hollow filaments of successive layers run parallel to each other. Through the successive layers there alternatively flow the one medium and the other, by preference countercurrently to each other, although in principle they also may flow concurrently. Figures 24, 25, 26, 27, 28, 29, 30, 31 and 32 show different shapes that may be chosen for the cross-section of the hollow synthetic filaments. Under some circumstances it may be of advantage to be able to choose from a number of different cross-sections.

Figure 33 shows part of a heat exchanger according to the invention, the block 82 containing successive layer-forming groups of hollow filaments 83 and 84. Figure 34 shows one of the layers 83 separately. The filament groups 83 are all connected to a common supply channel 86 for a first fluid. Likewise, the groups 84 of hollow filaments are all connected to a common supply channel 87 and a common discharge channel 88. The directions of flow are indicated by arrows. The invention will now be further described in the following two examples.

Example 1

A block-shaped heat exchanger of the type according to Figures 1 and 7, in which the streams cross each other at an angle of 90°, was built up from capillaries of polycarbonate having an internal diameter of 500 $\mu$m and a wall thickness of 28 $\mu$m. The capillaries coated with aluminium foil were grouped in layers and with the aid of an unsaturated polyester resin they were formed into a block measuring 8x8x100 cm. As a fluid for the two streams air was used. At the inlet of the heat exchanger the temperature of the first stream was 20°C and the temperature of the cold stream 10°C. The volume flows were identical: 1,5$m^3$/min. At the outlet the temperature of the first stream was found to be 11°C and of the second stream 19°C. This corresponds to an efficiency of 90% of the heat exchanger. Per stream the pressure drop across the heat exchanger was found to be 192 Pascal.

Example 2

A block-shaped heat exchanger of the type according to Figures 1 and 7, in which the streams cross each other at an angle of 90°, was built up from a resin and a large number of layers of polyester capillaries coated with aluminium foil and having an internal diameter of 224 $\mu$m and a wall thickness of 15 $\mu$m. The dimensions of the block were 87x87x60 cm. For the two streams use was made of water having a volume flow of 0,7$m^3$/min. per stream. At the inlet the temperature of stream 1 was 50°C and of stream 2 it was 30°C. At the outlet the temperature of stream 1 was found to be 31°C and of stream 2 it was 49°C, which corresponds to a heat exchange efficiency of 95%. Per stream the pressure drop across the heat exchanger was found to be $1,85 \times 10^4$ Pascal.

As mentioned before, the channels in the heat exchanger according to the invention have a low water vapour permeability as a result of the metal coating. The permeability to liquid of the channel is, of course, also low. The heat exchanger according to the invention is therefore suitable for use in it of various combinations of fluids, such as water-air, brine-water, freon-air, steam-brine, etc.

Figure 35 is a cross-sectional view of a polymer film 400 in which there are formed a large number of channels 401 having an inner diameter of, say, 300 m. The polymer film is coated on both sides with aluminium foil 402 having a thickness of 0,1 m. Instead of aluminium it is possible in principle to make use of a coating of a different metal, for instance: nickel, copper, chromium or zinc. Such a polymer film 400 provided with channels 401 forms a layer. From a number of such layers the aforedescribed heat exchanger may be built up. The centre-to-centre distance 403 of the successive channels is less than five times, and preferably less than twice, the hydraulic diameter of the channels. Said coating may optionally be formed by an alloy or it may have been subjected to an anticorrosive treatment.

Figure 36 is a cross-sectional view of a layer for composing a heat exchanger in which the channels 401 are formed by the inside of a very large number of adjacent hollow filaments 404. The hollow filaments are covered by aluminium foil 405. The space around and between the hollow filaments 404 and between the hollow filaments and the coatings 405 is filled up with a filler having a thermal coefficient of conduction of at least 0,8 Joule/m sec °C.

It should be added that by the aforementioned hydraulic diameter is meant:

$$"D"=\frac{4.A}{0},$$

where 0=the outer circumference of a wetted surface of a channel through which there is a fluid flow, and A=the area of said wetted surface of a channel. So when use is made of channels or hollow filaments having a circular cross-section, the diameter D is equal to the hydraulic diameter, so that of channels having an inner diameter of 2 mm the hydraulic diameter is also 2 mm. With channels having a rectangular internal cross-section of, for instance, 2×5 mm the hydraulic diameter "D"=2,86 mm. Also other cross-sectional shapes may, of course, be used.

United States Patent Specification 3 863 712 describes an apparatus for exchanging heat between two fluids. One of the fluids flows through hollow filaments having an outer diameter of about 2,5 to 6,3 mm. The hollow filaments are formed into small groups which are braided together in such a way that they form a hairpin-like tube.

United States Patent Specification 2 980 404 describes a heat exchanger comprising helically extending channels for a fluid.

The DE—A—24 14 663 shows a heat exchanger comprising a rotor provided with a large number of conduits extending parallel to the axis of the rotor. These conduits may be formed from various materials, such as cellulose acetate, polyamide, polycarbonate and the like. It should be added that Australian Patent Specification 421/606 also describes a device comprising hollow, helical filaments. In this known device, however, the hollow filaments are permeable and for that reason different uses are proposed for it, more particularly the separation of substances via the permeable wall of the hollow filaments.

French Patent Specification 2 339 820 mentions the use in general of hollow synthetic filaments for a solar collector. The hollow filaments may be of glass, metal or a synthetic organic material.

The NL—A—6 514 170 relates to a heat exchanger of hollow synthetic filaments which extend substantially rectilinearly in bundles. Only the one fluid flows through hollow filaments. The other fluid flows through the space formed in the housing around and between the hollow filaments.

The NL—A—7 409 016 described frames provided with hollow filaments. These frames are first of all destined for uses where the hollow filaments are sufficiently permeable. For use in a heat exchanger these frames are considered less suitable because of the permeability of the hollow filaments.

Within the scope of the invention various modifications may be made.

**Claims**

1. An apparatus for the exchange of heat between at least two fluids, which apparatus is provided with synthetic channels having a hydraulic diameter of not more than 3 mm, said channels forming at least two groups, the first group being provided with connections for transporting a first fluid and the second group being provided with connections for transporting a second fluid, and each group is formed by a synthetic layer consisting of a series of channels, in which the centre-to-centre distance of successive channels is less than five times the hydraulic diameter of these channels, characterized in that the channels of a group are formed in a layer-forming film comprising at least 50 channels, at least one side of said layer is externally covered with a coating which is so impermeable to the fluids that measured at an ambient temperature of 20°C and 20% relative humidity the water vapour permeability of the wall of the channels is less than 1 gramme/$m^2$ 24 hours.

2. An apparatus according to claim 1, characterized in that the coating is of metal.

3. An apparatus according to one or more of the preceding claims, characterized in that the channels of a group are formed in a layer-forming uninterrupted polymer film, to at least one side of which said coating is applied.

4. An apparatus according to claim 1, characterized in that the space between the hollow filaments is filled up with a filler, such as a resin.

5. An apparatus according to one or more of the preceding claims, characterized in that it comprises four or more superimposed groups of channels, each group forming a layer.

6. An apparatus according to one or more of the preceding claims, characterized in that the channels are formed from one or more of the following substances or mixtures thereof:

polyolefins, such as polyethylene, polypropylene and polyisobutylene;
polystyrene and copolymers (random, alternating and block) of styrene and butadiene, acrylonitrile and acrylate esters;
polyhaloolefins, such as polyvinyl chloride and polytetrafluoroethylene;
polyvinyls, such as polyvinyl alcohol and polyvinyl acetate;
polyacrylates and polymethacrylates, such as polymethylmethacrylate and polymethylacrylate and other polyacrylates;
polyacrylonitrile;
elastomers such as natural rubber, synthetic rubbers, for instance silicone rubbers or polyolefinic rubbers or copolymers of the ethylenepropylene rubber type (E P D M);
polyoxides, such as polypropylene oxide and poly-2,6-dimethylphenylene oxide;

saturated and unsaturated polyesters, such as polyethylene terephthalate;
polyamides, such as nylon 6, nylon 66 and aromatic polyamides;
polycarbonates;
polyimides;
polybenzimidazoles;
polyurethanes;
semi-synthetic polymers, such as regenerated cellulose, more particularly those based on copper acetate;
thermohardening resins, such as epoxy resins and aminoplastics;
copolymers of two or more of the abovementioned polymers;
polysulphones;
inorganic polymers, such as polyphosphazenes.

7. An apparatus according to one or more of the preceding claims, characterized in that between the channels on the one hand and between the channels and the coating on the other there is provided a filler having a thermal coefficient of conduction of at least 0,8 Joule/m sec °C.

8. An apparatus according to one or more of the preceding claims, characterized in that the hydraulic diameter of the channels is 0,05—3 mm, and preferably 0,05—1 mm.

9. An apparatus according to claim 8, characterized in that the wall thickness of the channels is 5 to 20% of the hydraulic diameter, and preferably 10%.

10. An apparatus for the exchange of heat according to one or more of the claims 1—9, characterized in that it is applied in a thermal power system.

11. An apparatus for the exchange of heat according to one or more of the claims 1—9, characterized in that it is applied in a cooling or heat pump system.

12. An apparatus for the exchange of heat according to one or more of the claims 1—9, characterized in that it is used in a system for the recovery of heat from ventilation air.

13. An apparatus according to one or more of the claims 1—9, characterized in that it is applied in a system for collecting solar energy, more particularly from a solar collector.

**Patentansprüche**

1. Eine Vorrichtung für den Austausch von Wärme zwischen mindestens zwei Strömungsmitteln, welche Vorrichtung mit Kunststoffkanälen mit einem hydraulischen Durchmesser von nicht über 3 mm versehen ist, wobei die genannten Kanäle mindestens zwei Gruppen bilden, von denen die erste mit Anschlüssen für den Transport eines ersten Strömungsmittels und die zweite mit Anschlüssen für den Transport eines zweiten Strömungsmittels versehen ist, und jede Gruppe durch eine Kunststoffschicht gebildet ist, welche aus einer Anzahl von Kanälen besteht, in der der Abstand von Mittelpunkt zu Mittelpunkt aufeinanderfolgender Kanäle weniger beträgt als das Fünffache des hydraulischen Durchmessers dieser Kanäle, dadurch gekennzeichnet, daß die Kanäle einer Gruppe in einem eine Schicht bildenden Film gebildet werden, der mindestens 50 Kanäle aufweist, mindestens eine Seite der genannten Schicht außen mit einem Überzug versehen ist, welcher den Strömungsmitteln gegenüber so undurchlässig ist, daß, gemessen bei einer Umgebungstemperatur von 20°C und einer relativen Luftfeuchtigkeit von 20%, die Durchlässigkeit der Wandung der Kanäle Wasserdampf gegenüber unter 1 $g/m^2/24$ h beträgt.

2. Eine Vorrichtung nach Anspruch 1, dadurch gekennzeichnet, daß der Überzug aus Metall besteht.

3. Eine Vorrichtung nach einem oder mehreren der vorangehenden Ansprüche, dadurch gekennzeichnet, daß die Kanäle einer Gruppe in einem eine Schicht bildenden fortlaufenden Polymerfilm gebildet werden, auf dessen eine Seite zumindest der genannte Überzug aufgetragen wird.

4. Eine Vorrichtung nach Anspruch 1, dadurch gekennzeichnet, daß der Raum zwischen den Hohlfäden mit einem Füllmaterial, beispielsweise Harz, aufgefüllt wird.

5. Eine Vorrichtung nach einem oder mehreren der vorangehenden Ansprüche, dadurch gekennzeichnet, daß diese vier oder mehr übereinanderliegende Gruppen von Kanälen aufweist, wobei jede Gruppe eine Schicht bildet.

6. Eine Vorrichtung nach einem oder mehreren der vorangehenden Ansprüche, dadurch gekennzeichnet, daß die Kanäle aus einer oder mehreren der folgenden Substanzen oder Gemischen von diesen gebildet werden:

Polyolfine, wie Polyäthylen, Polypropylen und Polyisobutylen;
Polystyrol und Copolymere (Mischpolymere, alternierende sowie Blockmischpolymere) von Styrol und Butadien, Acrylonitril und Acrylatestern;
Polyhaloolefine, wie Polyvinylchlorid und Polytetrafluoräthylen;
Polyvinyle, wie Polyvinylalkohol und Polyvinylacetat;
Polyacrylate und Polymethacrylate, wie Polymethylmethacrylat und Polymethylacrylat und andere Polyacrylate;
Polyacrylnitril;
Elastomere, wie Naturgummi, synthetische Kautschuke, beispielsweise Siliconkautschuke oder polyolefinische Kautschuke oder Mischpolymere vom Typ Äthylenpropylenkautschuk (E P D M);
Polyoxide, wie Polypropylenoxid und Poly-2,6-dimethylphenylenoxid;
gesättigte und ungesättigte Polyester, wie Polyäthylenterephthalat;
Polyamide, wie Nylon 6, Nylon 66 und aromatische Polyamide;
Polycarbonate;

Polyimide;
Polybenzimidazole;
Polyurethane;
halbsynthetische Polymere, wie regenerierte Cellulose, insbesondere solche auf der Basis von Kupferacetat;
wärmehärtbare Harze, wie Epoxidharze und Aminoplaste;
Mischpolymere aus zwei oder mehreren der vorstehenden Polymere;
Polysulphone;
anorganische Polymere, wie Polyphosphazene.

7. Eine Vorrichtung nach einem oder mehreren der vorangehenden Ansprüche, dadurch gekennzeichnet, daß zwischen den Kanälen einerseits und zwischen den Kanälen und dem Überzug andererseits ein Füllmaterial vorgesehen ist, das einen Wärmeleitkoefficizenten von mindestens 0,8 Joule/m sec °C aufweist.

8. Eine vorrichtung nach einem oder mehreren der vorangehenden Ansprüche, dadurch gekennzeichnet, daß der hydraulische Durchmesser der Kanäle 0,05 bis 3 mm und vorzugsweise 0,05 bis 1 mm beträgt.

9. Eine Vorrichtung nach Anspruch 8, dadurch gekennzeichnet, daß die Dicke der Wandung der Kanäle 5 bis 20% des hydraulischen Durchmessers und vorzugsweise 10% beträgt.

10. Eine Vorrichtung für den Austausch von Wärme nach einem oder mehreren der Ansprüche 1 bis 9, dadurch gekennzeichnet, daß diese in einem Wärmekraftsystem angewandt wird.

11. Eine Vorrichtung für den Austausch von Wärme nach einem oder mehreren der Ansprüche 1 bis 9, dadurch gekennzeichnet, daß diese in einem Kühl- oder Wärmepumpsystem verwendet wird.

12. Eine Vorrichtung für den Austausch von Wärme nach einem oder mehreren der Ansprüche 1 bis 9, dadurch gekennzeichnet, daß diese in einem System für die Rückgewinnung von Wärme aus Ventilationsluft verwendet wird.

13. Eine Vorrichtung nach einem oder mehreren der Ansprüche 1 bis 9, dadurch gekennzeichnet, daß diese in einem System zum Auffangen von Sonnenenergie, insbesondere aus einem Solarkollektor, verwendet wird.

**Revendications**

1. Un appareil pour l'échange de chaleur entre au moins deux fluides, appareil qui est muni de canalisations ayant un diamètre hydraulique qui ne dépasse pas 3 mm, lesdites canalisations formant au moins deux groupes, le premier groupe étant muni de raccords pour transporter un premier fluide et le second groupe étant muni de raccords pour transporter un second fluide, et chaque groupe est formé par une couche synthétique constituée par une série de canalisations dans laquelle la distance de centre à centre de canalisations successives est inférieure à cinq fois le diamètre hydraulique de ces canalisations, caractérisé en ce que les canalisations d'un groupe sont formées en une pellicule formant couche comprenant au moins 50 canalisations, au moins un côté de ladite couche est extérieurement recouvert d'un revêtement qui est si imperméable aux fluides que, mesurée à une température ambiante de 20°C et à une humidité relative de 20%, la perméabilité à la vapeur d'eau des parois des canalisations est inférieure à 1 g/m$^2$ par 24 heures.

2. Un appareil selon la revendication 1, caractérisé en ce que le revêtement est en métal.

3. Un appareil selon une plusieurs des revendications précédentes, caractérisé en ce que les canalisations d'un groupe sont formées dans une pellicule de polymère ininterrompue formant couche à l'un des côtés au moins de laquelle ledit revêtement est appliqué.

4. Un appareil selon la revendication 1, caractérisé en ce que l'espace entre les filaments creux est rempli d'une matière de remplissage, telle qu'une résine.

5. Un appareil selon une ou plusieurs des revendications précédentes, caractérisé en ce qu'il comprend au moins quatre groupes superposés de canalisations, chaque groupe formant une couche.

6. Un appareil selon une ou plusieurs des revendications précédentes, caractérisé en ce que les canalisations sont formées à partir d'une ou de plusieuis des substances suivantes ou leurs mélanges:

les polyoléfines, telles que le polyéthylène, le polypropylène et le polyisobutylène;
le polystyrène et les copolymères (statistiques, alternés et séquencés) de styrène et de butadiène, acrylonitrile et esters acrylates;
les polyhalooléfines, telles que le chlorure de polyvinyle et le polytétrafluoroéthylène;
les polyvinyles, tels que l'alcool polyvinylique et le polyvinyl acétate;
les polyacrylates et polyméthacrylates, tels que le polyméthylméthacrylate et le polyméthacrylate et autres polyacrylates;
le polyacrylonitrile;
les élastomères, tels que le caoutchouc naturel, les caoutchoucs synthétiques, par exemple les caoutchoucs de silicone ou les caoutchoucs polyoléfiniques ou les copolymères du type caoutchouc d'éthylène-propylène (EPDM);
les polyoxydes, tels que l'oxyde de polypropylène et les oxydes de poly-2,6-diméthylphénylène;
les polyesters saturés et insaturés, tels que le polyéthylène téréphtalate;
les polyamides, telles que le nylon 6, le nylon 66 et les polyamides aromatiques;
les polycarbonates;
les polyimides;
les polybenzimidazoles;
les polyuréthanes;

les polymères semi-synthétiques, tels que la cellulose régénérée, en particulier ceux à base d'acétate au cuivre;
les résines thermodurcissables, telles que les résines époxydes et les aminoplastiques;
les copolymères d'au moins deux des polymères ci-dessus mentionnés;
les polysulfones;
les polymères inorganiques, tels que les polyphosphazènes.

7. Un appareil selon une ou plusieurs des revendications précédentes, caractérisé en ce qu'entre les canalisations, d'une part, et entre les canalisations et le revêtement, d'autre part, il est disposé une matière de remplissage ayant un coefficient thermique de conduction d'au moins 0,8 J/m.s.°C.

8. Un appareil selon une ou plusieurs des revendications précédentes, caractérisé en ce que le diamètre hydraulique des canalisations est de 0,05—3 mm et, de préférence, 0,05—1 mm.

9. Un appareil selon la revendication 8, caractérisé en ce que l'épaisseur de paroi des canalisations est comprise entre 5 et 20% du diamètre hydraulique et est, de préférence, égale à 10% du diamètre hydraulique.

10. Un appareil pour l'échange de chaleur selon une ou plusieurs des revendications 1—9, caractérisé en ce qu'il est appliqué dans un système à énergie thermique.

11. Un appareil pour l'échange de chaleur selon une ou plusiers des revendications 1—9, caractérisé en ce qu'il est appliqué dans un système de refroidissement ou de pompe à chaleur.

12. Un appareil pour l'échange de chaleur selon une ou plusieurs des revendications 1—9, caractérisé en ce qu'il est utilisé dans un système pour la récupération de chaleur d'air de ventilation.

13. Un appareil pour l'échange de chaleur selon une ou plusieurs des revendications 1—9, caractérisé en ce qu'il est appliqué dans un système servant à capter l'énergie solaire, plus particulièrement au moyen d'un collecteur solaire.

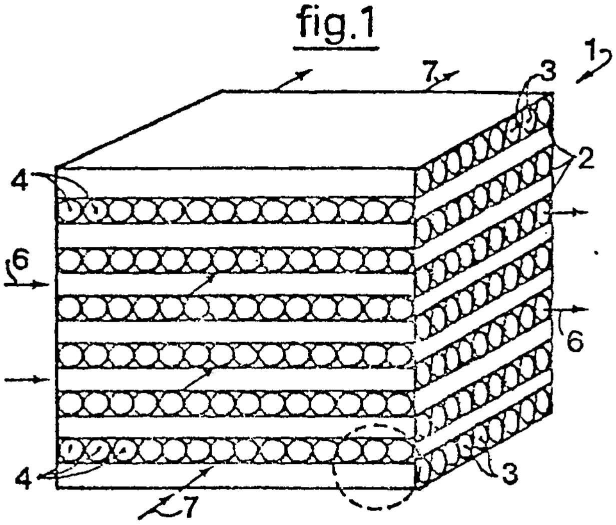

fig.1

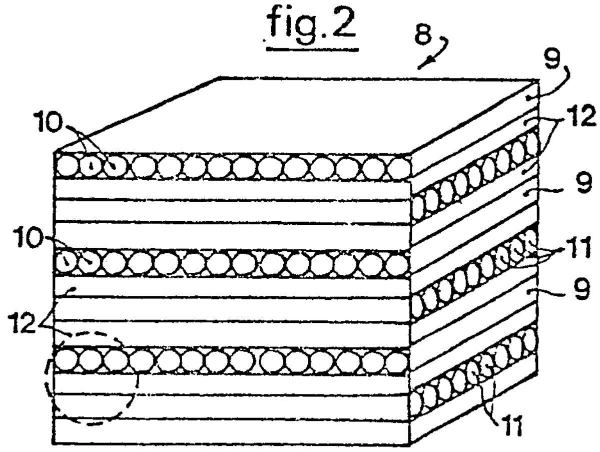

fig.2

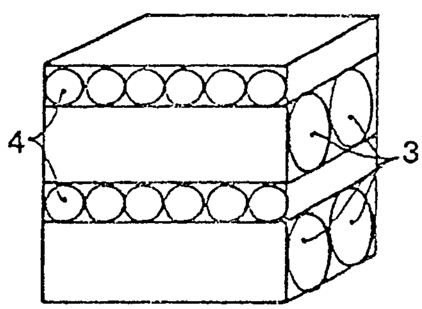

fig.3

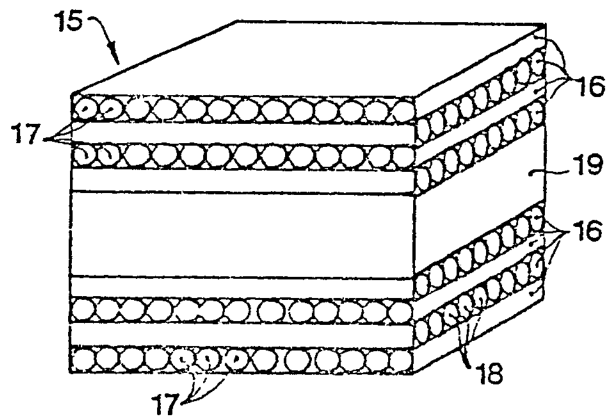

fig.4

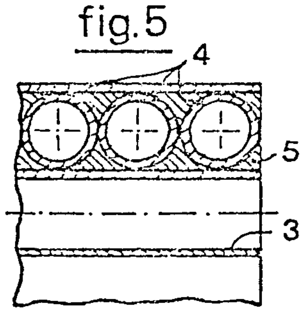

fig.5

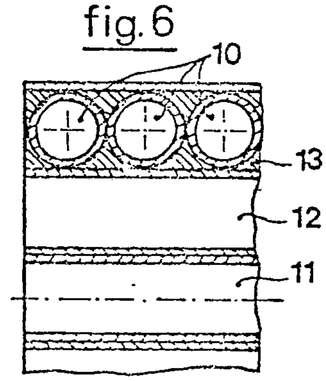

fig.6

fig.7

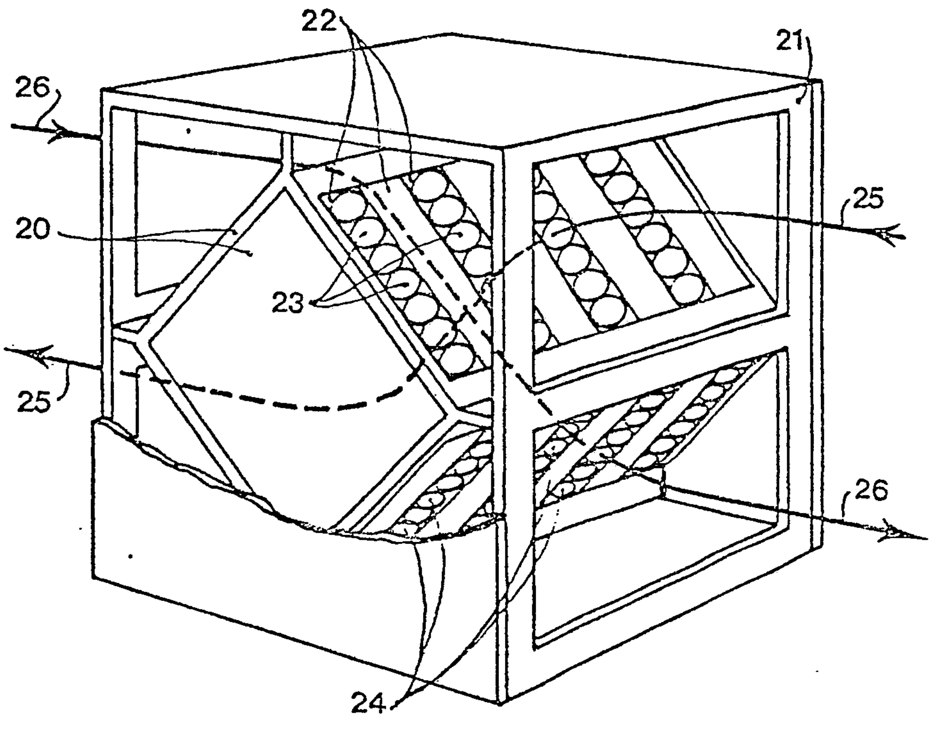

fig. 8

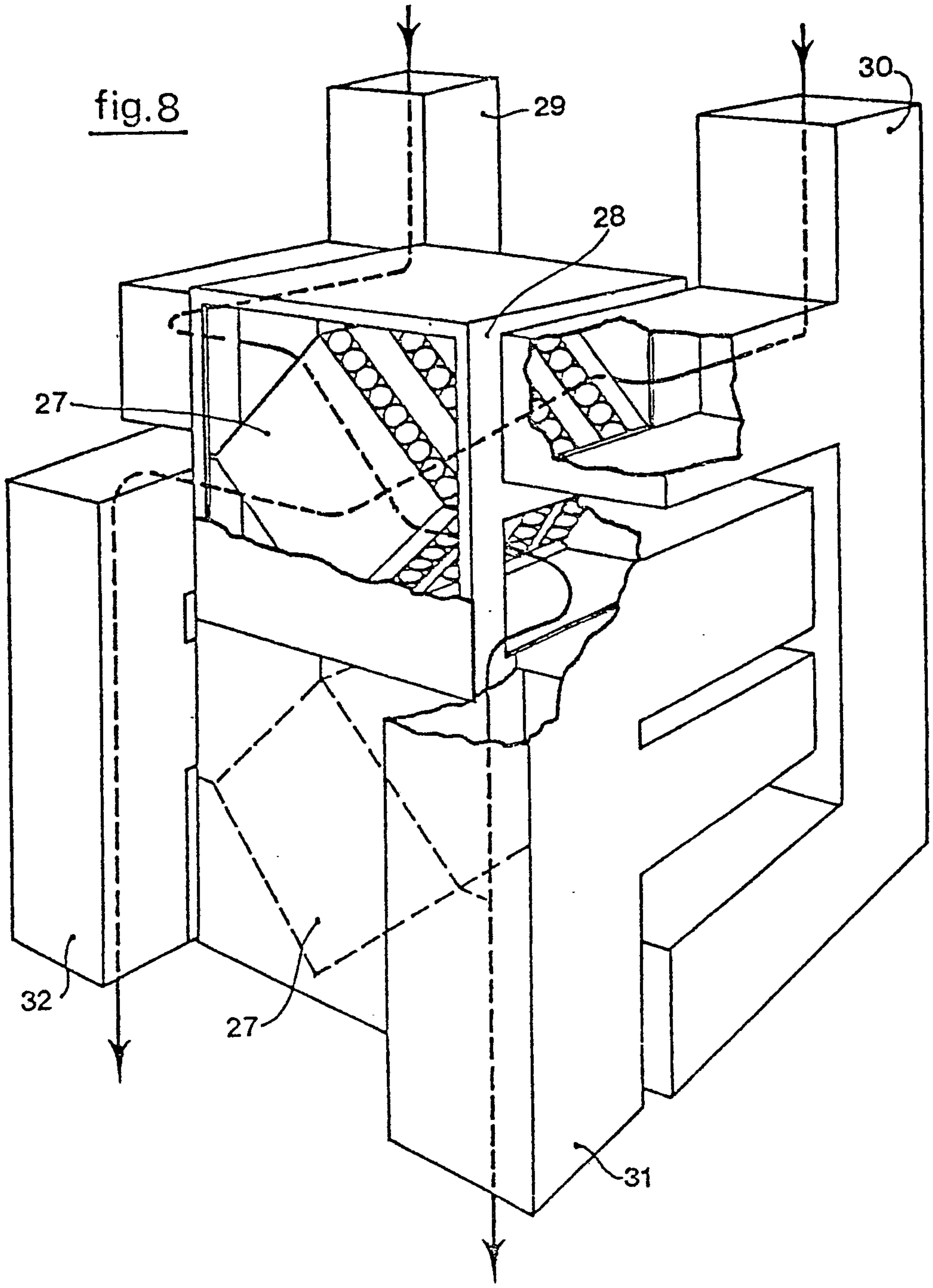


fig.9

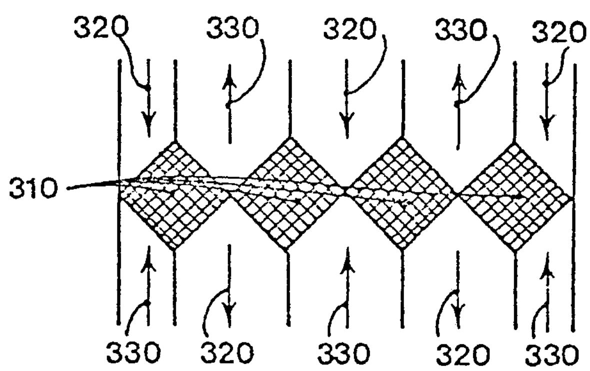

fig.10

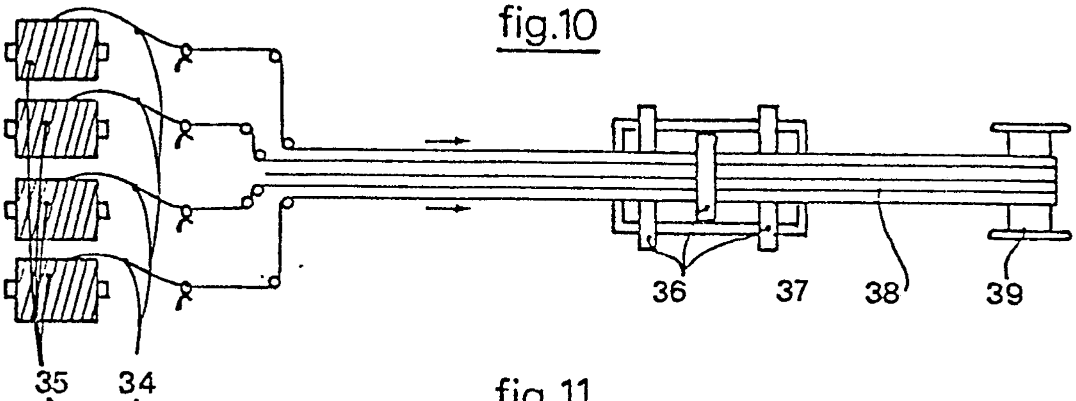


fig.11

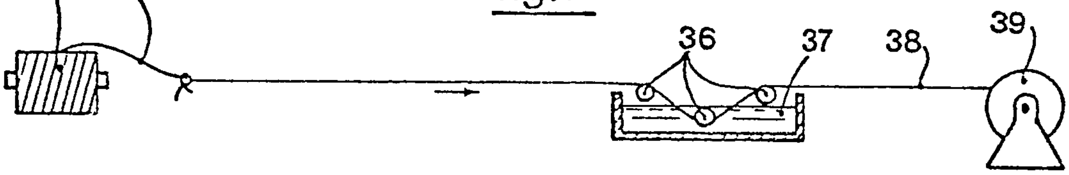


fig.12

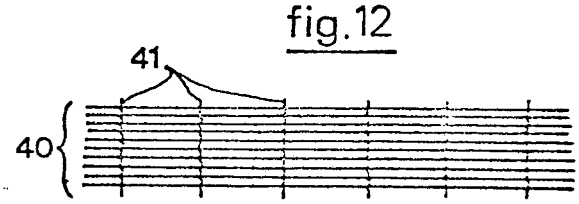


fig. 13

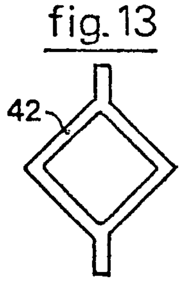


fig.14

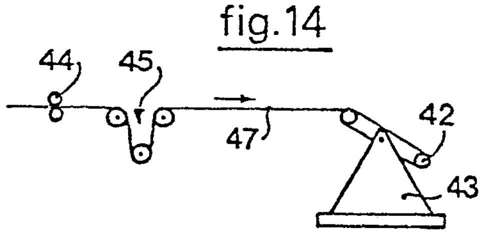


fig. 15

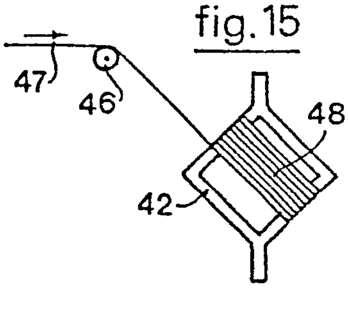


fig. 16

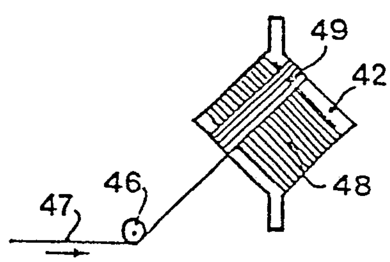


fig. 17

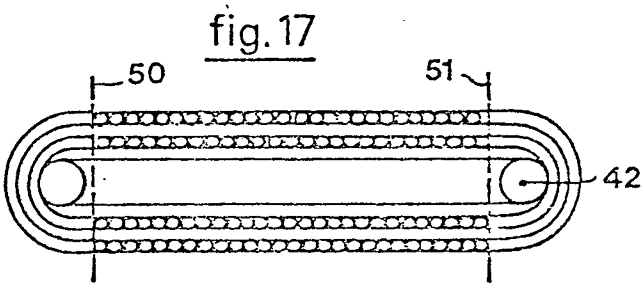

fig. 18

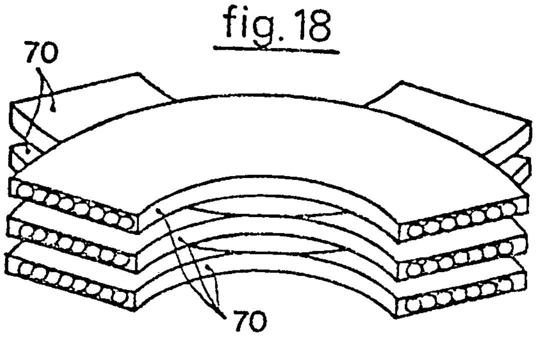


fig.19

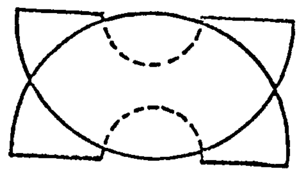

fig. 20

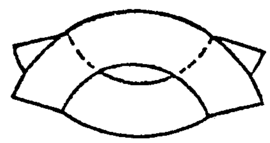

fig. 21

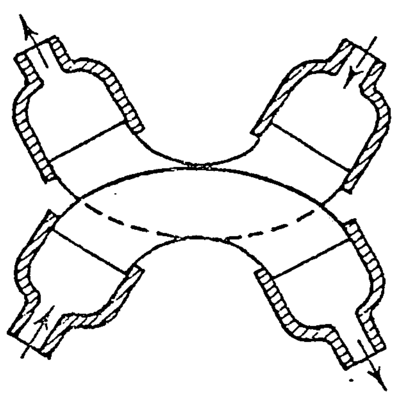

fig. 23

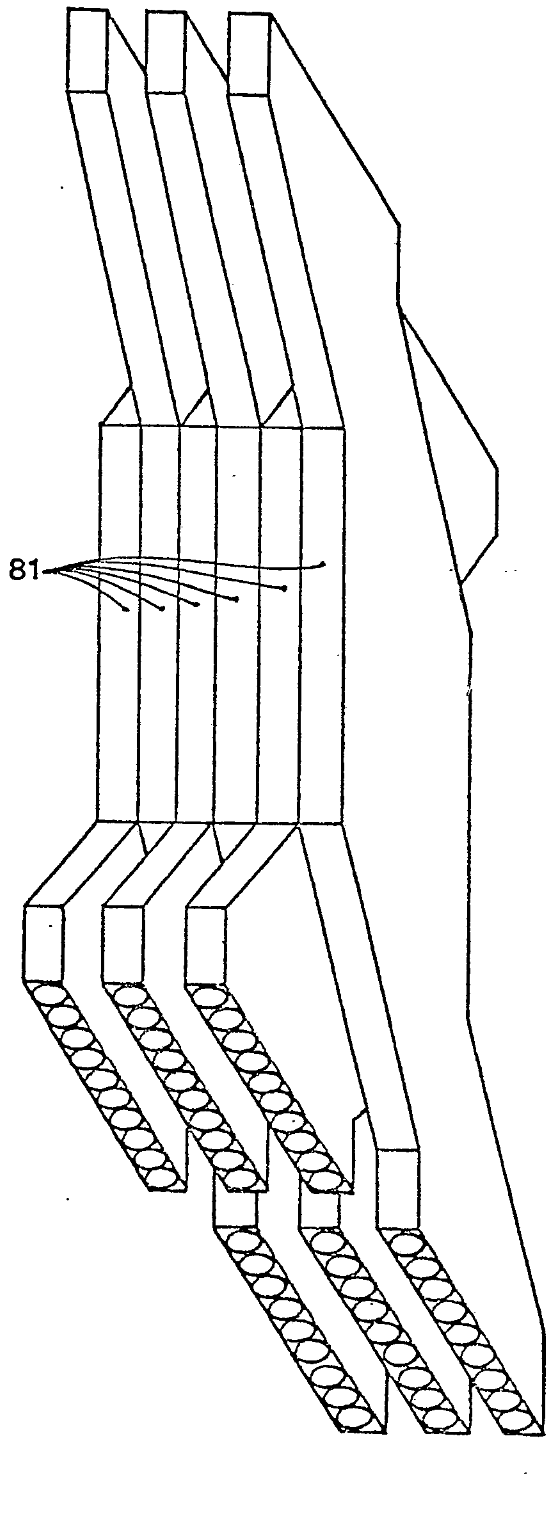


fig. 22

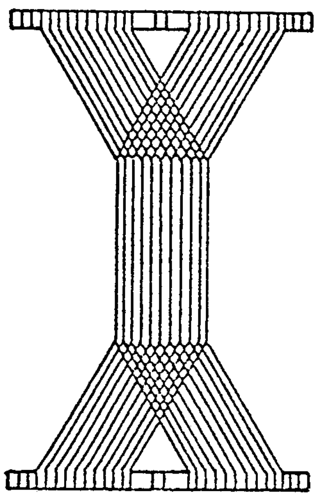

fig.24

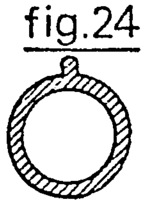

fig.25

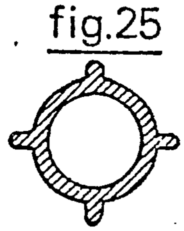

fig.26

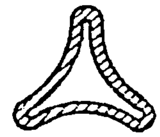

fig.27

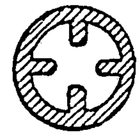

fig.28

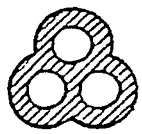

fig.29

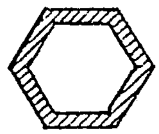

fig.30

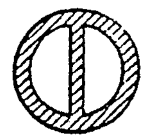

fig.31

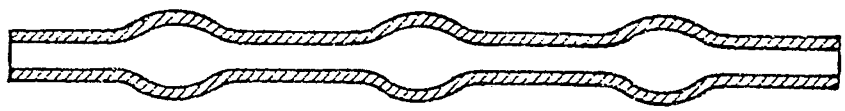

fig. 32

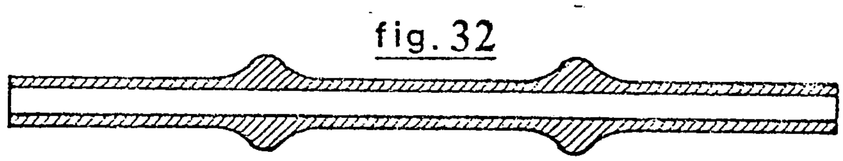

fig.34

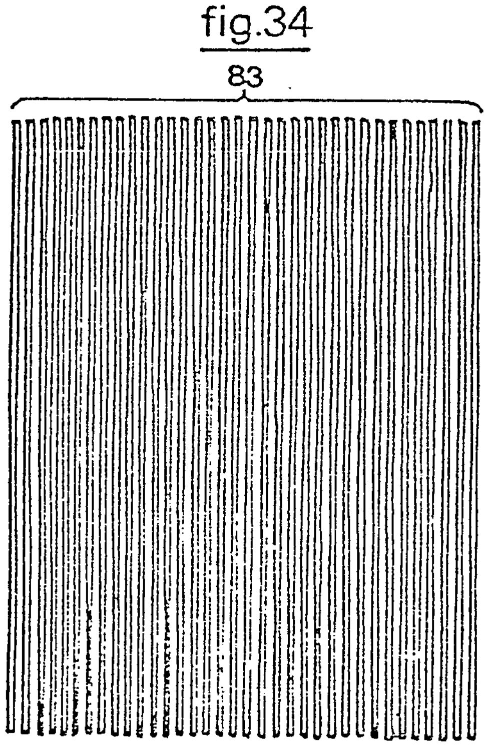


fig. 33

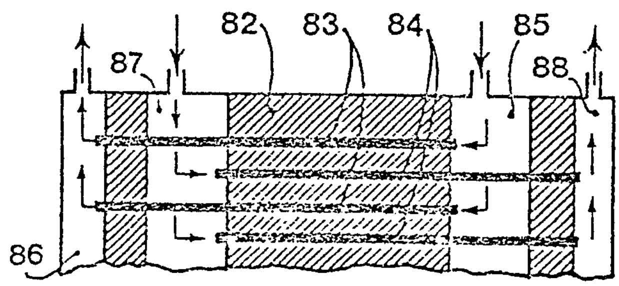

fig. 35

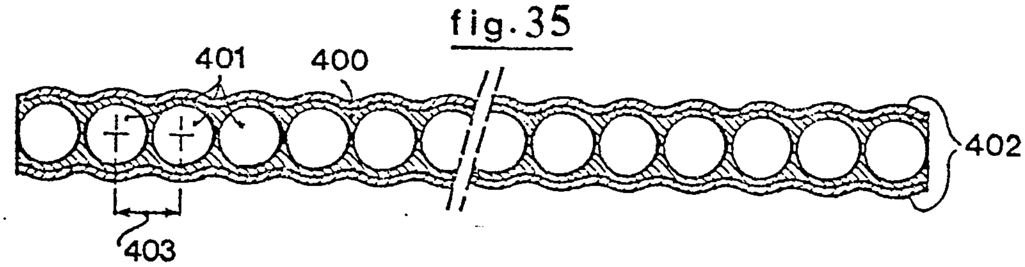


fig. 36